# EUROPÄISCHE PATENTSCHRIFT

(11) **EP 1 163 279 B1**
(45) Veröffentlichungstag und Bekanntmachung des Hinweises auf die Patenterteilung: **02.02.2005**
(21) Anmeldenummer: 00920469.4
(22) Anmeldetag: 03.03.2000
(51) Int. Cl.: C08G 18/08, C08G 18/66, C08G 18/80, C09D 175/06

(54) **POLYURETHAN UND SEINE VERWENDUNG ZUR HERSTELLUNG LÖSEMITTELFREIER BESCHICHTUNGSSTOFFE**
POLYURETHANE AND ITS USE FOR PRODUCING SOLVENT-FREE COATING SUBSTANCES
POLYURETHANNE ET SON UTILISATION POUR LA PRODUCTION DE MATIERES DE REVETEMENT EXEMPTES DE SOLVANTS

(30) Priorität: 10.03.1999 DE 19910492
(43) Veröffentlichungstag der Anmeldung: 19.12.2001
(73) Patentinhaber: BASF Coatings AG, 48165 Münster (DE)
(72) Erfinder: POTH, Ulrich, D-48163 Münster (DE); RÖCKRATH, Ulrike, D-48308 Senden (DE); HEID, Ingrid, D-48149 Münster (DE)
(74) Vertreter: Fitzner, Uwe, Dr.
(86) Internationale Anmeldenummer: PCT/EP2000/001841
(87) Internationale Veröffentlichungsnummer: WO 2000/053651

(56) Entgegenhaltungen:
- DE-A- 19 822 631
- US-A- 4 608 413
- US-A- 5 294 665

## Beschreibung

Die vorliegende Erfindung betrifft ein neues reaktives Polyurethan und eine neue Polyurethandispersion und deren Verwendung zur Herstellung lösemittelfreier Beschichtungsstoffe, insbesondere Basislacke und/oder Klarlacke oder Uni-Decklacke. Außerdem betrifft die vorliegende Erfindung einen neuen lösemittelfreien Beschichtungsstoff, welcher das neue Polyurethan und die neue Polyurethandispersion enthält. Desweiteren betrifft die vorliegende Erfindung ein neues Verfahren zur Herstellung von Mehrschichtlackierungen auf gegebenenfalls grundierten Substraten. Nicht zuletzt betrifft die vorliegende Erfindung neue einschichtige oder mehrschichtige Lackierungen, insbesondere Automobilerstlackierungen, industrielle Lackierungen, inklusive Coil Coatings und Container Coatings, und Möbellackierungen, sowie Substrate, welche diese neuen Lackierungen aufweisen.

Im Rahmen der vorliegenden Erfindung bedeutet der Begriff "lösemittelfrei", daß der betreffende Beschichtungsstoff völlig frei von organischen Lösemitteln ist oder nur die geringen Mengen an organischen Lösemitteln enthält, wie sie über die Ausgangsprodukte üblicherweise eingetragen werden.

Es besteht die generelle Aufgabe, Beschichtungsstoffe für die industrielle Verarbeitung bereitzustellen, die während der Verarbeitung ein Minimum an flüchtigen organischen Substanzen freisetzen.

Bekannt sind:
1. Lösemittelfreie Beschichtungsstoffe auf Basis primärer Polymerisatdispersionen, die aber nur in Kombination mit gelösten Cobindemitteln und Cosolventien diffusionsdichte, beständige, glänzende Lackierungen ergeben.
2. Beschichtungsstoffe auf Basis sekundärer Dispersionen, insbesondere Polyacrylat-, Polyester- oder Polyurethandispersionen, die indes auch nur mit Anteilen von Cosolventien dichte, beständige, glänzende Lackierungen liefern und bei der Applikation und Filmbildung überdies zu Kochern neigen.
3. Lösemittelfreie Lacksysteme in Form von Pulvertacken oder Pulverlack-Slurries, die dichte, glatte, glänzende Lackierungen bilden können, aber mit einem besonderen Aufwand hergestellt werden müssen und insbesondere bei Pulverlacken besondere Applikationsanlagen erfordern.

In der Patentschrift US 4,608,413 werden beispielsweise Polyether- bzw. Polyester-Copolymerisate beschrieben, welche durch Polyether und/oder Polyester mit einem Molekulargewicht zwischen 500 und 10000 und freien alkoholischen Hydroxylgruppen vernetzt werden.

Aufgabe der vorliegenden Erfindung ist es, einen neuen lösemittelfreien Beschichtungsstoff bereitzustellen, welcher die Nachteile des Standes der Technik nicht mehr länger aufweist, sondern mit den konventionellen Applikationsmethoden im wesentlichen ohne Abgabe von flüchtigen organischen Substanzen verarbeitet und appliziert werden kann und nach dem Aushärten dichte, beständige, glänzende Lackierungen liefert.

Demgemäß wurde das neue reaktive Polyurethan (1) mit einem zahlenmittleren Molekulargewicht Mn von 800 bis 14.000 Dalton, einem Verzweigungsgrad von 0,0 bis 3,0 Mol/kg, und einer Isocyanatfunktionalität von 2,0 bis 6,0, gefunden, welches herstellbar ist, indem man
(1.1) mindestens einen Polyester und/oder
(1.2) mindestens einen Polyether, welche beide mindestens zwei gegenüber Isocyanaten reaktionsfähige funktionelle Gruppen, eine Molmasse von 400 bis 2.500 Dalton und einen Verzweigungsgrad von 0 bis 3,5 Mol/kg aufweisen;
(1.3) mindestens ein Polyol mit einer Molmasse von 62 bis 400 Dalton und einer Funktionalität von 2 bis 4 und/oder
(1.4) mindestens ein Polyamin und/oder
(1.5) mindestens ein Alkanolamin;
(1.6) mindestens eine Verbindung mit mindestens einer zur Anionenbildung befähigten funktionellen Gruppe und mindestens einer, insbesondere mindestens zwei, mit Isocyanaten reaktionsfähigen funktionellen Gruppen;
(1.7) mindestens ein Polyisocyanat und/oder
(1.8) mindestens ein Polyisocyanataddukt;
(1.9) mindestens ein Blockierungsmittel für die Isocyanatgruppen, welche bei einer bestimmten Reaktionstemperatur von den von ihnen blockierten Isocyanatgruppen wieder abgespaltet oder in Gegenwart des Vemetzungsmittels (2) über eine Austauschreaktion wieder freigesetzt werden;
   sowie
(1.10) mindestens ein Neutralisationsmittel für die anionische Stabilisierung im wäßrigen Medium, welche anorganische und/oder organische Basen enthalten oder hieraus bestehen;
miteinander umsetzt
und
für die blockierten Isocyanatgruppen der Polyurethane (1) ein Vernetzungsmittel (2) enthaltend
(2.1) mindestens ein Polyol ausgewählt aus der Gruppe, bestehend aus Ethylenglykol, Propylengykol, Etheroligomere des Etylenglykols und Propylenglykols, Propandiol-1,3, Butandiol-1,4, Butandiol-1,3. Methylpropandiol-1,3, Pentandiol-1,5, Methylbutandiol-1,4, Neopentylglykol, Hexandiol-1,6, Glycerin, Trimethylolethan, Trimethylolpropan oder Trishydroxyethylisocyanurat und/oder
(2.2) mindestens ein Polyamin ausgewählt aus der Gruppe, bestehend aus Ethylendiamin, Propylendiamin, Methyldiaminopropan, Diethylentriamin, Dipropylentriamin, m-Xylylendiamin, p-Xylylendiamin, 4,4'-Diaminodicyclohexan oder 4,4'-Diamino-3,3'-Dimethylcyclohexan und/oder
(2.3) mindestens ein Alkanolamin ausgewählt aus der Gruppe, bestehend aus Ethanolamin, Methylethanolamin, Di-iso-propylamin, Diethanolamin, N-Methyldiethanolamin, Hydroxyethoxyethylamin, Polyetheraminole, Aminomethylpropanol, Trishydroxymethylaminomethan oder Triethanolamin
verwendet.

Im folgenden wird das neue reaktive Polyurethan als "erfindungsgemäßes Polyurethan" bezeichnet.

Außerdem wurde die neue Polyurethandispersion gefunden, welche mindestens ein erfindungsgemäßes Polyurethan in einem wäßrigen Medium dispergiert enthält.

Im folgenden wird die neue Polyurethandispersion als "erfindungsgemäße Polyurethandispersion" bezeichnet.

Des weiteren wurde der neue lösemittelfreie Beschichtungsstoff, insbesondere Basislack und/oder Klarlack oder Uni-Decklack, gefunden, welcher mindestens ein erfindungsgemäßes Polyurethan bzw. eine erfindungsgemäße Polyurethandispersion enthält.

Im folgenden wird der neue lösemittelfreie Beschichtungsstoff als "erfindungsgemäßer Beschichtungsstoff" bezeichnet.

Des weiteren wurde ein neues Verfahren zur Herstellung einschichtiger und mehrschichtiger Lackierungen gefunden, bei dem der erfindungsgemäße Beschichtungsstoff verwendet wird.

Im folgenden wird das neue Verfahren zur Herstellung einschichtiger und mehrschichtiger Lackierungen als "erfindungsgemäßes Verfahren" bezeichnet.

Darüber hinaus wurden neue einschichtige und mehrschichtige Lackierungen gefunden, welche unter Verwendung des erfindungsgemäßen Beschichtungsstoffs und/oder mit Hilfe des erfindungsgemäßen Verfahrens hergestellt werden.

Im folgenden werden die neuen einschichtigen und mehrschichtigen Lackierungen als "erfindungsgemäße Lackierungen" bezeichnet.

Nicht zuletzt wurden neue grundierte oder ungrundierte Substrate gefunden, welche die erfindungsgemäßen Lackierungen aufweisen und im folgenden als "erfindungsgemäße Substrate" bezeichnet werden.

Im Hinblick auf den Stand der Technik war es überraschend und, für den Fachmann nicht vorhersehbar, daß die Aufgabe, welche der vorliegenden Erfindung zugrunde liegt, mit Hilfe des erfindungsgemäßen Polyurethans bzw. der erfindungsgemäßen Polyurethandispersion gelöst werden konnte, zumal die vom Stand der Technik her bekannten Polyurethandispersionen noch immer einen vergleichsweise hohen Anteil an Lösemittel enthalten müssen, damit ihr Eigenschaftsprofil allen Ansprüchen gerecht wird.

Das erfindungsgemäße Polyurethan weist ein zahlenmittleres Molekulargewicht Mn von 800 bis 14.000 Dalton, bevorzugt von 1.500 bis 6.000 Dalton, auf. Es hat einen Verzweigungsgrad von 0,0 bis 3,0 Mol/kg, bevorzugt 0,1 bis 1,0 Mol/kg. Seine Funktionalität, bezogen auf die blockierten Isocyanatgruppen, liegt bei 2,0 bis 6,0 bevorzugt von 2,5 bis 4,0 pro Mol.

Das erfindungsgemäße Polyurethan ist herstellbar aus den Ausgangsprodukten (1.1) bis (1.10).

Erfindungsgemäß werden als Ausgangsprodukt (1.1) mindestens ein Polyester und als Ausgangsprodukt (1.2) mindestens ein Polyether verwendet. Die Ausgangsprodukte (1.1) und (1.2) können jedes für sich oder als Gemisch zur Herstellung des erfindungsgemäßen Polyurethans verwendet werden. Erfindungsgemäß sind die Polyester (1.1) von Vorteil und werden deshalb bevorzugt verwendet.

Die Ausgangsprodukte (1.1) und (1.2) enthalten mindestens zwei gegenüber Isocyanaten reaktionsfähige funktionelle Gruppen. Beispiele geeigneter funktioneller Gruppen dieser Art sind Thio-, Amino-, Hydroxyl-, oder Epoxidgruppen. Erfindungsgemäß sind Hydroxylgruppen vorteilhaft und werden deshalb bevorzugt verwendet.

Die Polyester (1.1) und Polyether (1.2) haben Molmassen von 400 bis 2.500 Dalton, bevorzugt 800 bis 1.800 Dalton und einen Verzweigungsgrad von 0 bis 3,5 Mol/kg.

Die erfindungsgemäß zu verwendenden Polyester (1.1) sind erhältlich durch Umsetzung von Polycarbonsäuren, Polyolen sowie gegebenenfalls Monocarbonsäuren.

Beispiele geeigneter Polycarbonsäuren sind aromatische Polycarbonsäuren wie Terephthalsäure, Isophthalsäure. Phthalsäure, Trimellithsäure oder Pyromellithsäure sowie ihre kemsubstituierten Alkylderivate; cycloaliphatische Polycarbonsäuren wie Tetrahydrophthalsäure, 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure oder Tricyclodecan-Dicarbonsäure, welche sowohl in ihrer cis- als auch in ihrer trans-Form sowie als Gemisch beider Formen eingesetzt werden können; oder acyclische Polycarbonsäuren wie Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure, Maleïnsäure, Fumarsäure, Itaconsäure, Citraconsäure oder Dimerfettsäuren.

Erfindungsgemäß geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Polycarbonsäuren eingesetzt werden, sofern sie existieren.

Beispiele geeigneter Polyole sind Diole wie Ethylenglykol, 1,2- oder 1,3-Propandiol, Methylpropan-1,3-diol, Etheroligomere des Etylenglykols und Propylenglykols wie Diethylenglykol oder Dipropylenglykol,, 1,2-, 1.3- oder 1,4-Butandiol, 1,2-, 1,3-, 1,4- oder 1,5-Pentandiol, 1,2-, 1,3-, 1,4-, 1,5-oder 1,6-Hexandiol, Hydroxypivalinsäureneopentylester, Neopentylglykol, 1,2-, 1,3- oder 1,4-Cyclohexandiol, 1,2-, 1,3- oder 1,4-Cyclohexandimethanol, Tricyclodecandimethanol (TCD), Trimethylpentandiol, Ethylbutylpropandiol, Octandiole, Nonandiote, die stellungsisomeren Diethyloctandiole, 2-Butyl-2-ethylpropandiol-1,3, -2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1 ]heptan, 2,2-Diethylpropandiol-1,3, 2,2-Dipropylpropandiol-1,3 2-Cyclohexyl-2-methyl-propandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol, 1,3-(2'-Hydroxypropyl)-benzol oder Dimerdiole aus Dimerfettsäuren; oder Triole wie Glycerin, Trimethylolethan, Trimethylolpropan. Trishydroxyethylisocyanurat oder Pentaerythrit.

Hierbei werden die Diole und die Triole in einem molaren Verhältnis angewandt, daß der gewünschte Verzweigungsgrad resultiert.

Beispiele geeigneter, gegebenenfalls angewandter Monocarbonsäuren sind 2-Ethylhexansäure, 3,3,5-Trimethylhexansäure, Pelargonsäure, Fettsäuren aus Kokosfett, Fettsäuren natürlicher Öle, Harzsäuren, Benzoesäure, p-tert.-Butylbenzoësäure.

Die Herstellung des Polyesters (1.1) erfolgt nach den bekannten Methoden der Veresterung, wie dies beispielsweise in der DE-A-40 24 204, Seite 4, Zeilen 50 bis 65, beschrieben ist. Die Umsetzung erfolgt dabei üblicherweise bei Temperaturen zwischen 180 und 280°C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure.

Üblicherweise wird die Herstellung des Polyesters (1.1) in Gegenwart geringer Mengen eines geeigneten Lösemittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Beispiele geeigneter erfindungsgemäß zu verwendender Polyether (1.2) sind Addukte von Polyolen, insbesondere der vorstehend im Detail beschriebenen, und Ethylenoxid oder Propylenoxid oder Gemischen der beiden in Form von statistischen Copolymeren oder Blockcopolymeren.

Erfindungsgemäß werden als weitere Ausgangsprodukte mindestens ein Polyol (1.3) mit einer Molmasse von 62 bis 400 Dalton und einer Funktionalität von 2 bis 4 und/oder mindestens ein Polyamin (1.4) und/oder mindestens ein Alkanolamin (1.5) für die Herstellung des erfindungsgemäßen Polyurethans verwendet.

Beispiele geeigneter Polyole (1.3) sind die vorstehend im Detail beschriebenen Polyole.

Beispiele geeigneter Polyamine (1.4) sind z. B. Hydrazin, Ethylendiamin, Propylendiamin, Methyldiaminopropan, höhere Alkandiamine, Diethylentriamin, Dipropylentriamin, m-Xylylendiamin, p-Xylylendiamin, 4,4'-Diaminodicyclohexan, 4,4'-Diamino-3,3'-Dimethytcyclohexan oder isomere Oktandiamine.

Beispiele geeigneter Alkanolamine (1.5) sind z.B. Ethanolamin, Methylethanolamin, Di-iso-propylamin, Diethanolamin, N-Methyldiethanolamin, Hydroxyethoxyethylamin, Polyetheraminole, Aminomethylpropanol, Trishydroxymethylaminomethan oder Triethanolamin.

Erfindungsgemäß wird als weiteres Ausgangsprodukt mindestens eine Verbindung (1.6) mit mindestens einer zur Anionenbildung befähigten funktionellen Gruppe und mindestens einer, insbesondere mindestens zwei, mit Isocyanaten reaktionsfähigen funktionellen Gruppen für die Herstellung des erfindungsgemäßen Polyurethans verwendet.

Beispiele geeigneter zur Anionenbildung befähigter funktioneller Gruppen sind Carbonsäure-, Sulfonsäure- und Phosphonsäuregruppen, von denen die Carbonsäuregruppen besonders vorteilhaft sind und deshalb erfindungsgemäß bevorzugt verwendet werden.

Beispiele geeigneter mit Isocyanaten reaktionsfähiger funktioneller Gruppen sind die vorstehend beschriebenen, von denen die Hydroxylgruppen erfindungsgemäß von Vorteil sind und deshalb bevorzugt angewandt werden.

Beispiele bevorzugt verwendeter Verbindungen (1.6) sind Dimethylolpropionsäure, Hydroxypivalinsäure, das Reaktionsprodukt aus Ethylendiamin und Acrylsäure, das Reaktionsprodukt aus einem Dioldiester der Maleïnsäure und schwefliger Säure oder deren Alkalisalze.

Erfindungsgemäß werden als, weitere Ausgangsprodukte für die Herstellung des erfindungsgemäßen Polyurethans mindestens ein Polyisocyanat (1.7) und/oder mindestens ein Polyisocyanataddukt (1.8) verwendet.

Als Polyisocyanate (1.7) kommen grundsätzlich alle der üblichen und bekannten, auf dem Lackgebiet verwendeten Polyisocyanate in Betracht, welche auch als Lackpolyisocyanate bezeichnet werden.

Beispiele geeigneter Polyisocyanate (1.7) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1 -yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat, Dicyclohexylmethan-4,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4-oder 1,3-Bis(4-isocyanatobut-1-yl)cyclohexan, m-Tetramethylxylylendiisocyanat (= 1,3-Bis-(2-isocyanatoprop-2-yl)-benzol oder Toluylendiisocyanat.

Beispiele geeigneter Polyisocyanataddukte (1.8) sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Isocyanurat-, Biuret-, Allophanat-, Iminooxadiazindon-, Urethan-, Hamstoff- Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden die vorstehend im Detail beschriebenen Polyisocyanate (1.7) verwendet.

Ganz besonders bevorzugt werden Gemische aus Uretdion- und/oder Isocyanuratgruppen und/oder Allophanatgruppen aufweisenden Polyisocyanataddukten (1.8) auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate (1.7) bestehen.

Erfindungsgemäß wird für die Herstellung des erfindungsgemäßen Polyurethans mindestens ein Blockierungsmittel (1.9) verwendet. Bekanntermaßen werden diese bei einer bestimmten Reaktionstemperatur von den von ihnen blockierten Isocyanatgruppen wieder abgespaltet oder in Gegenwart des nachstehend beschriebenen Vemetzungsmittels (2) über eine Austauschreaktion wieder freigesetzt.

Beispiele geeigneter Blockierungsmittel- (1.9) sind
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure oder Milchsäureester;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthiohamstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie
xvii) Gemische dieser Blockierungsmittel, insbesondere Dimethylpyrazol und Triazole, Malonester und Acetessigsäureester oder Dimethylpyrazol und Succinimid.

Erfindungsgemäß werden für die Herstellung der erfindungsgemäßen Polyurethane Neutralisationsmittel (1.10) verwendet.

Die Neutralisationsmittel (1.10) enthalten anorganische und/oder organische, insbesondere organische Basen, oder bestehen aus diesen.

Beispiele geeigneter anorganischer Basen sind Alkalihydroxide, Ammoniak oder Salze, welche Ammoniak freisetzen; Beispiele geeigneter organischer Basen sind Amine, bevorzugt tertiäre Amine wie Triethylamin, N,N-Dimethylethanolamin, Triethanolamin.

Besonders vorteilhafte erfindungsgemäße Polyurethane resultieren aus der Umsetzung von Polyestern (1.1), die aus cycloaliphatischen und aliphatischen Polycarbonsäuren gebildet sind, mit cycloaliphatischen oder aliphatischen Diisocyanaten (1.7), Triolen (1.3) und Ketoximen, Dimethylpyrazol, Acetoacetaten und Malonestem bzw. deren Gemische als Blockierungsmittel (1.9).

Die vorstehend im Detail beschriebenen Ausgangsprodukte werden nach Art und Menge so ausgewählt, daß ein erfindungsgemäßes Polyurethan der vorstehend definierten Spezifikation resultiert.

Erfindungsgemäß werden hierbei das Blockierungsmittel (1.9) im molaren Verhältnis von 0,9 bis 1,3, bezogen auf die nicht mit den anderen Ausgangsprodukten umgesetzten oder umsetzbaren Isocyanatgruppen, und das Neutralisationsmittel (1.10) im molaren Verhältnis von 0,5 bis 1,2, bezogen auf die zur Anionenbildung befähigten funktionellen Gruppen der Verbindung (1.6), eingesetzt.

Ansonsten kann der Fachmann die Auswahl aufgrund seines allgemeinen Fachwissens gegebenenfalls unter Zuhilfenahme einfacher Vorversuche treffen.

Die erfindungsgemäßen Polyurethane (1) werden nach an sich bekannten Verfahren hergestellt. Beispielhaft sei auf die Patentschriften EP-A-0 355 433, DE-A-35 45 618, DE-A-38 13 866. DE-A-32 10 051, DE-A-26 24 442, DE-A-37 39 332, US-A-4,719,132, EP-A-0 089 497, US-A-4,558,090, US-A-4,489,135, DE-A-36 28 124, EP-A-0 158 099, DE-A-29 26 584, EP-A-0 195 931, DE-A-33 21 180 und DE-A-40 05 961 verwiesen.

So werden die Ausgangsprodukte Polyester (1.1) und/oder Polyether (1.2), Polyole (1.3) Polyamine (1.4) und/oder Alkanolamine (1.5), Verbindungen(1.6), Polyisocyanate (1.7) und/oder Polyisocyanataddukte (1.8) ggf. in Anwesenheit eines Lösemittels, das vergleichsweise leicht flüchtig und wasserlöslich ist und nicht mit den Isocyanaten reagieren kann, sowie ggf. wirksame Mengen von Katalysatoren bei Temperaturen von 50 bis 120 °C zur Reaktion gebracht. Beispiele geeigneter Lösemittel sind niedrige Ketone wie Aceton, Methylethylketon oder Methylisobutylketon. Beispiele geeigneter Katalysatoren sind Zinnsalze. Es resultiert ein ggf. verzweigtes Polyurethanpräpolymer mit endständigen freien Isocyanatgruppen.

Das Präpolymer kann auch stufenweise aufgebaut werden. Die Reaktion wird durch die Bestimmung des NCO-Equivalentgewichts und ggf. der Messung der Viskosität einer definierten Meßlösung verfolgt.

Anschließend werden die noch freien Isocyanatgruppen mit dem Blockierungsmittel (1.9) bei Temperaturen von 50 bis 120°C umgesetzt. Bestimmte Blockierungsmittel (1.9) erfordern den Einsatz von Katalysatoren wie z. B. Alkaliphenolat bei Acetoacetat und Malonestem. Der Umsatz wird durch. Bestimmung des NCO-Äquivalentgewichts verfolgt, und die Reaktion wird üblicherweise so lange durchgeführt, bis die Konzentration der Isocyanatgruppen unter die Nachweisgrenze gesunken ist. Es resultiert ein ggf. verzweigtes Polyurethan mit einem bestimmten Gehalt an reaktionsfägigen verkappten Isocyanatgruppen und zur Anionenbildung befähigten funktionellen Gruppen aus den eingebauten Verbindungen (1.6). Diese funktionellen Gruppen des Polyurethans in dem genannten Prozeßlösemittel werden dann mit einer definierten Menge eines Neutralisationsmittels (1.10) neutralisiert, wodurch das erfindungsgemäße Polyurethan resultiert.

Das erfindungsgemäße Polyurethan wird dann in einem wässrigen Medium dispergiert, wodurch die erfindungsgemäße Polyurethandispersion resultiert.

Das wäßrige Medium enthält im wesentlichen Wasser oder besteht hieraus. Hierbei kann das wäßrige Medium in untergeordneten Mengen die vorstehend beschriebenen Neutralisationsmittel (1.10), die nachstehend beschriebenen Vernetzungsmittel (2) und/oder Lackadditive (3) und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Vorzugsweise wird reines Wasser verwendet.

Aus der erfindungsgemäßen Polyurethandispersion wird das Lösemittel und die ggf. enthaltenen Überschüsse an Blockierungsmittel (1.9) durch Vakuumdestillation bei Temperaturen von 50 bis 110°C bis unter ihre Nachweisgrenzen abdestilliert. Es entsteht eine lösemittelfreie erfindungsgemäße Polyurethandispersion mit anionischer Stabilisierung.

Eine Variante des vorstehend beschriebenen Verfahrens zur Herstellung des erfindungsgemäßen Polyurethans und der erfindungsgemäßen Polyurethandispersion Verfahren besteht darin, die Polyisocyanate (1.7) und/oder Polyisocyanataddukte (1.8) zunächst mit dem Blockierungsmittel (1.9) teilweise vorreagieren zu lassen und dann erst mit den anderen Ausgangsprodukten umzusetzen.

Eine weitere Verfahrensvariante besteht darin, die Reaktion des Polyurethanpräpolymers mit dem Blockierungsmittel bis zu einem vergleichsweise niedrigen NCO-Äquivalentgewicht zu führen und die dann noch vorhandenen Isocyanatgruppen mit den Polyolen (1.3), Polyaminen (1.4) und/oder Alkanolaminen (1.5) zum weiteren Molekülaufbau zur Reaktion zu bringen.

Bei noch einer weiteren Verfahrensvariante findet dieser molekulare Aufbau mit Polyaminen (1.4) und/oder Alkanolaminen (1.5) erst nach der Neutralisation oder gemeinsam mit der Neutralisation in dem wäßrigen Medium statt.

Eine andere besondere Verfahrensvariante besteht darin, daß man das noch freie Isocyanantgruppen und verkappte Isocyanatgruppen enthaltende Polyurethanpräpolymer in dem wäßrigen Medium während der Neutralisation mit Wasser reagieren läßt, wobei aus den Isocyanatgruppen teilweise Aminogruppen gebildet werden, die unter Kettenverlängerung mit anderen Isocyanatgruppen zu Hamstoffgruppen reagieren.

Das erfindungsgemäße Polyurethan und die erfindungsgemäße Polyurethandispersion werden für die Herstellung der erfindungsgemäßen Beschichtungsstoffe, insbesondere der erfindungsgemäßen Klarlacke oder Decklacke, verwendet.

Die erfindungsgemäßen Beschichtungsstoffe enthalten mindestens ein Vemetzungsmittel (2) mit funktionellen Gruppen, welche mit den blockierten Isocyanatgruppen der erfindungsgemäßen Polyurethane bei höheren Temperaturen, insbesondere Temperaturen oberhalb 80°C Vemetzungsreaktionen eingehen können.

Beispiele geeigneter Vernetzungsmittel (2) sind Polyole (2.1), Polyamine (2.2) und/oder Alkanolamine (2.3), insbesondere solche, welche bei Raumtemperatur nicht merklich flüchtig sowie wasserlöslich oder i. V. m. dem erfindungsgemäßen Polyurethan wasserverdünnbar sind.

Beispiele geeigneter Polyole (2.1) sind die vorstehend beschriebenen Polyole wenn sie vorstehend genannte Bedingungen erfüllen, insbesondere Ethylenglykol, Propylengykol, Etheroligomere des Etylenglykols und Propylenglykols, Propandiol-1,3, Butandiol-1,4, Butandiol-1,3, Methylpropandiol-1,3, Pentandiol-1,5, Methylbutandiol-1,4, Neopentylglykol, Hexandiol-1,6, Glycerin, Trimethylolethan, Trimethylolpropan oder Trishydroxyethylisocyanurat, insbesondere Trishydroxyethylisocyanurat.

Beispiele geeigneter Polyamine (2.2) sind Ethylendiamin, Propylendiamin, Methyldiaminopropan, Diethylentriamin, Dipropylentriamin, m-Xylylendiamin, p-Xylylendiamin, 4,4'-Diaminodicyclohexan oder 4,4'-Diamino-3,3'-Dimethylcyclohexan.

Beispiele geeigneter Alkanolamine (2.3) sind Ethanolamin, Methylethanolamin, Di-iso-propylamin, Diethanolamin, N-Methyldiethanolamin, Hydroxyethoxyethylamin, Polyetheraminole, Aminomethylpropanol, Trishydroxymethylaminomethan oder Triethanolamin.

Vorteilhafterweise wird oder werden das Polyol (2.1), das Polyamin (2.2) und/oder das Alkanolamin (2.3) in einer Menge verwendet werden, daß das Verhältnis von (i) Äquivalentgewicht des erfindungsgemäßen Polyurethans, bezogen auf die hierin enthaltenen blockierten Isocyanatgruppen, zu (ii) Äquivalentgewicht des Vemetzungsmittels (2) 0,6 bis 1,3 beträgt.

Der erfindungsgemäße Beschichtungsstoff kann lackübliche Additive (3) in wirksamen Mengen enthalten. Art und Menge der Additive (3) richten sich vor allem nach dem Verwendungszweck des erfindungsgemäßen Beschichtungsstoffs. Wesentlich ist, daß diese Additive (3) unter den Verarbeitungs- und Applikationsbedingungen des erfindungsgemäßen Beschichtungsstoffs nichtflüchtig sein sollen, so daß nur bei der thermischen Härtung (Einbrennen) flüchtige organische Bestandteile wie die Neutralisationsmittel (1.10), Blockierungsmittel (1.9), Additive (3) oder Abbauprodukte freigesetzt werden.

Wird der erfindungsgemäße Beschichtungsstoff als Basislack oder Uni-Decklack verwendet, enthält er farb- und/oder effektgebende Pigmente (3.1) in üblichen und bekannten Mengen. Die Pigmente (3.1) können aus anorganischen oder organischen. Verbindungen bestehen und können effekt- und/oder farbgebend sein. Der erfindungsgemäße Beschichtungsstoff gewährleistet daher aufgrund dieser Vielzahl geeigneter Pigmente eine universelle Einsatzbreite der Beschichtungsstoffe und ermöglicht die Realisierung einer Vielzahl von Farbtönen und optischer Effekte.

Als Effektpigmente (3.1) können Metaliplättchenpigmente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Es werden insbesondere solche Effektpigmente (3.1) verwendet, welche in wäßrigen Medien stabil sind. Beispiele für geeignete anorganische farbgebende Pigmente (3.1) sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Desweiteren kann der erfindungsgemäße Beschichtungsstoff organische und anorganische Füllstoffe (3.1) in üblichen und bekannten, wirksamen Mengen enthalten. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasem, Cellulosefasern, Polyethylenfasern oder Holzmehl.

Diese Additive (3.1) entfallen, wenn die erfindungsgemäßen Beschichtungsstoffe als Klarlacke verwendet werden.

Beispiele geeigneter Additive (3), welche sowohl in den erfindungsgemäßen Klarlacken und Decklacken vorhanden sein können, sind
- UV-Absorber (3.2);
- Radikalfänger (3.3);
- Katalysatoren für die Vernetzung (3.4);
- Slipadditive (3.5);
- Polymerisationsinhibitoren (3.6);
- Entschäumer (3.7);
- Emulgatoren (3.8), insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel (3.9) wie Siloxane, fluorhaltige Verbindungen, Carbonsäurehalbester, Phosphorsäureester, Polyacrylsäuren und deren Copolymere oder Polurethane;
- Haftvermittler (3.10);
- Verlaufmittel (3.11);
- filmbildende Hilfsmittel (3.11) wie Cellulose-Derivate;
- Flammschutzmittel oder
- rheologiesteuemde Additive (3.12) wie die aus den Patentschriften WO 94/22968, EP-A-0 276 501, EP-A-0 249 201 oder WO 97/12945 bekannten; vemetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Weitere Beispiele geeigneter Additive (3) werden in dem Lehrbuch "Lackadditive" von Johan Bieleman, Wiley-VCH, Weinheim, New -York, 1998, beschrieben.

Methodisch gesehen weist die Herstellung des erfindungsgemäßen Beschichtungsmittels keine Besonderheiten auf, sondem erfolgt in üblicher und bekannter Weise durch Vermischen seiner Bestandteile in üblichen und bekannten Mischaggregaten wie Dissolvem. Hierbei kann das Vemetzungsmittel (2) als solches oder in Wasser gelöst der erfindungsgemäßen Polyurethandispersion hinzugegeben werden. Dann werden die Additive (3) hinzugegeben. Hiernach wird mit Wasser auf die gewünschte Verarbeitungsviskosität eingestellt. Die Additive (3) können indes bereits in der organischen Phase nach der Herstellung des erfindungsgemäßen Polyurethans zugegeben werden, wonach sie gemeinsam mit dem erfindungsgemäßen Polyurethan in die erfindungsgemäße Polyurethandispersion überführt werden. Das Vemetzungsmittel (2) kann indes auch in organischer Phase mit dem erfindungsgemäßen Polyurethan vermischt werden; die resultierende organische Lösung wird dann in einem wäßrigen Medium dispergiert, und das organische Lösemittel wird gegebenenfalls im Vakuum abdestilliert oder gestrippt.

Für die Bearbeitung und Applikation kann der Feststoffgehalt der erfindungsgemäßen Beschichtungsstoffe breit variiert werden. Erfindungsgemäß ist es indes von Vorteil, wenn die erfindungsgemäßen Beschichtungsstoffe hierbei einen Feststoffgehalt von 25 bis 55 Gew.-%, bevorzugt 30 bis 45 Gew.-%, aufweisen.

Der erfindungsgemäße Beschichtungsstoff kann durch übliche Applikationsmethoden, wie z.B. Spritzen, Rakeln, Streichen, Gießen, Tauchen oder Walzen auf beliebige, ggf. grundierte Substrate wie Metall, Holz, Kunststoff, Glas oder Papier, insbesondere Metall aufgebracht werden. Im Falle von Kunststoffen können die üblichen und bekannten Hydro-Grundierungen angewandt werden. Im Falle von Metallen werden üblicherweise Grundierungen, hergestellt aus kathodischen Elektrotauchlacken und Füllern, verwendet.

Die erfindungsgemäßen Beschichtungsstoffe eignen sich hervorragend für die Herstellung einschichtiger oder mehrschichtiger Lackierungen insbesondere Automobilerstlackierungen, industrielle Lackierungen, inklusive Coil Coatings und Container Coatings, und Möbellackierungen. In allen Anwendungszwecken können sie als Basislacke und/oder Klarlacke oder Uni-Decklacke verwendet werden. Mit besonderem Vorteil werden sie für die Automobilerstlackierung verwendet.

Für die Herstellung der erfindungsgemäßen einschichtigen oder mehrschichtigen Lackierungen werden die erfindungsgemäßen Beschichtungsstoffe nach ihrer Applikation bei höheren Temperaturen thermisch gehärtet. Vorteilhafterweise werden hierbei Temperaturen von 80 bis 180, vorzugsweise 100 bis 170 und insbesondere 120 bis 160 °C angewandt. Die Dauer der Härtung kann breit variieren und kann je nach erfindungsgemäßem Beschichtungsstoff eine Minute bis zu mehreren Stunden betragen. Für die thermische Härtung können die üblichen und bekannten. Vorrichtungen wie Umluftöfen oder IR-Strahler angewandt werden.

Der erfindungsgemäße Beschichtungsstoff ist insbesondere hervorragend für die Herstellung erfindungsgemäßer mehrschichtiger Lackierungen nach dem erfindungsgemäßen Verfahren geeignet.

Das erfindungsgemäße Verfahren geht im Verfahrensschritt (I) aus von der Applikation eines Basislacks auf der Substratoberfläche oder der Grundierung. Die resultierende Basislackschicht wird nicht ausgehärtet, sondem lediglich zwischengetrocknet. Im Verfahrensschritt (II) erfolgt die Naß-in-naß-Applikation des Klarlacks, gefolgt vom Aushärten der resultierenden Basislack-/Klarlackschicht im Verfahrensschritt (III). Erfindungsgemäß handelt es sich bei dem Basislack und/oder Klarlack um einen erfindungsgemäßen Beschichtungsstoff. Wenn als Basislack oder als Klarlack kein erfindungsgemäßer Beschichtungsstoff verwendet wird, werden stattdessen übliche und bekannte Wasserbasislacke oder Klarlacke verwendet.

Es resultieren geschlossene, weitgehend diffusionsdichte, harte, glänzende, elastische erfindungsgemäße einschichtige oder mehrschichtige Lackierungen ohne Störungen wie Kocher, Schlieren oder Wolkigkeit (haze), die sich außerdem durch eine besonders hohe Chemikalienbeständigkeit und Witterungsbeständigkeit auszeichnen.

### Beispiele

### Herstellbeispiel 1

### Herstellung der erfindungsgemäßen Polyurethandispersion

In einen Edelstahlreaktor mit 4 l Nutzvolumen, einem randgängigem Rührer, einem Rückflußkühler, regelbarer Ölheizung und Temperaturmessung für das Reaktionsgemisch wurden 1447 g einer 75 %-igen Lösung in Methylethylketon eines gesättigten Polyesters (1.1) aus Hexahydrophthalsäureanhydrid, Neopentylglykol und Hexandiol-1,6 mit einer mittleren Molmasse von 1085 Dalton, einer OH-Zahl von 93,4 und einer Säurezahl von 10, 40,2 g Trimethylolpropan, 227,8 g Dimethylolpropionsäure, 954,6 g Isophorondiisocyanat und 711,3 g Methylethylketon eingewogen. Das Reaktionsgemisch wurde vorsichtig auf 82°C aufgeheizt, wodurch, ein Rückfluß entstand. Das Reaktiongemisch wurde bei 80 bis 82 °C gehalten, bis das NCO-Äquivalentgewicht, bezogen auf die Lösung, 1350 erreichte. Dann wurde auf 50°C abgekühlt, und es wurden 200,1 g Methylethylketoxim zugegeben. Das Reaktionsgemisch wurde so lange auf 70 °C aufgeheizt, bis das NCO-Äquivalentgewicht, bezogen auf die Lösung, auf über 25.000 angestiegen war. Dann wurde das Reaktionsgemisch in 3000 g deionisiertes Wasser, das auf 50 °C erwärmt worden war, mit 121 g N,N-Dimethylethanolamin vermischt, wonach die Mischung dispergiert wurde.

Die resultierende Polyurethandispersion wurde in einen Reaktor, ausgestattet mit einem Kondensator und Vorlage für eine Vakuumdestillation eingefüllt und auf 60 °C erwärmt. Es wurde von Anfang an Vakuum von 75 mm angelegt und dann bei 60 °C während zwei Stunden destilliert. Der Gehalt an Methylethylketon war danach unter 0,02 Gew.-%.

Die resultierende lösemittelfreie Polyurethandispersion wurde mit deionisiertem Wasser und einer weiteren Menge N,N-Dimethylethanolamin auf einen Feststoffgehalt von 40 Gew.-% und einen pH-Wert von 7,8 eingestellt. Das in der Dispersion enthaltene Polyurethan wies ein zahlenmittleres Molekulargewicht von 2508 Dalton, einen Verzweigungsgrad von 0,12 Mol/kg, eine Säurezahl von 43 und ein Äquivalentgewicht, bezogen auf die blockierten Isocyanatgruppen, von 1090 auf.

### Herstellbeispiel 2

### Herstellung eines erfindungsgemäßen Klarlacks

83,25 Gew.-Teile der Polyurethandispersion gemäß Herstellbeispiel 1 wurden mit 2,65 Gew.-Teilen Trishydroxyethylisocyanurat, 2 Gew.-Teilen einer 10 %-igen Lösung eines ethoxylierten Nonylphenols, 2 Gew.-Teilen eine 3 %igen Lösung einer Polyacrylsäure und 10,1 Gew.-Teilen deionisiertem Wassers gemischt und durch intensives Rühren homogenisiert. Es resultierte ein wäßriger lösemittelfreier Klarlack mit einem Feststoffgehalt bzw. einem Gehalt an nichtflüchtigen Bestandteilen von 36 Gew.-%.

### Beispiel

### Herstellung einer erfindungsgemäßen Mehrschichtlackierung

Auf Stahlplatten mit einem für die Automobillackierung üblichen Aufbau aus einem Elektrotauchlack mit 21 µm Schichtdicke und einem Wasserfüller mit 35 µm Schichtdicke wurde ein üblicher und bekannter wäßriger Silber-Metallic-Basislack durch pneumatisches Spritzen aufgetragen und während 10 Minuten bei 80 °C vorgetrocknet, so daß eine Schichtdicke von 16 µm resultierte. Dann wurde der wäßrige Klarlack gemäß Herstellbeispiel 2 durch pneumatisches Spritzen aufgetragen und während 5 Minuten bei 60 °C vorgetrocknet. Die vorgetrockneten Lackschichten wurden dann in einem Einbrennofen während 20 Minuten bei 155 °C Umlufttemperatur ausgehärtet. Die Trockenschichtdicke des Klarlackschicht war 42 µm.

Es resultierte eine glatte, glänzende mehrschichtige Lackierung, die keine Störungen wie Kocher, Schlieren oder Wolkigkeit (haze) aufwies, einen hohen metallischen Effekt zeigte und ausgesprochen beständig gegen Chemikalien ist, was anhand üblicher und bekannter Testverfahren wie etwa der dem Fachmann gutbekannten untermauert wurde.

Bei dem MB-Gradientenofen-Test wurden die Prüftafeln des Beispiel 1 unter definierten Bedingungen der Schädigung durch Schwefelsäure ausgesetzt. Hierzu wurden vedünnte Schwefelsäure, Salzsäure und Natronlauge mit Pipetten (25 µl pro Tropfen) im Abstand von je einer Segmentbreite (Einstellung des Gradienten auf 30 - 74 °C [1 °C pro Heizsegment]) aufgetragen. Nach einer Lagerung von 72 Stunden im Normklima 23 °C wurden die Prüftafeln auf einem Gradientenofen (z.B. Typ: 2615 Fa. BYK-Gardner) während 30 min belastet. Ermittelt wurden die Temperaturen, bei denen die ersten sichtbaren Veränderungen auftraten. In allen Fällen lagen die Temperaturen oberhalb 40 °C.

## Patentansprüche

1. Beschichtungsstoff, frei von organischen Lösungsmitteln, enthaltend mindestens ein reaktives Polyurethan (1) mit einem zahlenmittleren Molekulargewicht Mn von 800 bis 14.000 Dalton, einem Verzweigungsgrad von 0,0 bis 3,0 Mol/kg, und einer Isocyanatfunktionalität von 2,0 bis 6,0, herstellbar, indem man
(1.1) mindestens einen Polyester und/oder
(1.2) mindestens einen Polyether, welche beide mindestens zwei gegenüber Isocyanaten reaktionsfähige funktionelle Gruppen, eine Molmasse von 400 bis 2.500 Dalton und einen Verzweigungsgrad von 0 bis 3,5 Mol/kg aufweisen;
(1.3) mindestens ein Polyol mit einer Molmasse von 62 bis 400 Dalton und einer Funktionalität von 2 bis 4 und/oder
(1.4) mindestens ein Polyamin und/oder
(1.5) mindestens ein Alkanolamin;
(1.6) mindestens eine Verbindung mit mindestens einer zur Anionenbildung befähigten funktionellen Gruppe und mindestens einer mit Isocyanaten reaktionsfähigen funktionellen Gruppen;
(1.7) mindestens ein Polyisocyanat und/oder
(1.8) mindestens ein Polyisocyanataddukt;
(1.9) mindestens ein Blockierungsmittel für die Isocyanatgruppen,
welche bei einer bestimmten Reaktionstemperatur von den von ihnen blockierten Isocyanatgruppen wieder abgespaltet oder in Gegenwart des Vemetzungsmittels (2) über eine Austauschreaktion wieder freigesetzt werden;
sowie
(1.10) mindestens ein Neutralisationsmittel für die anionische Stabilisierung im wäßrigen Medium, welche anorganische und/oder organische Basen enthalten oder hieraus bestehen;
miteinander umsetzt
und
für die blockierten Isocyanatgruppen der Polyurethane (1) ein Vemetzungsmittel (2) enthaltend
(2.1) mindestens ein Polyol ausgewählt aus der Gruppe, bestehend aus Ethylenglykol, Propylengykol, Etheroligomere des Ethylenglykols und Propylenglykols, Propandiol-1,3, Butandiol-1,4, Butandiol-1,3, Methylpropandiol-1,3, Pentandiol-1,5, Methylbutandiol-1,4, Neopentylglykol, Hexandiol-1,6, Glycerin, Trimethylolethan, Trimethylolpropan oder Trishydroxyethylisocyanurat und/oder
(2.2) mindestens ein Polyamin ausgewählt aus der Gruppe, bestehend aus Ethylendiamin, Propylendiamin, Methyldiaminopropan, Diethylentriamin, Dipropylentriamin, m-Xylylendiamin, p-Xylylendiamin, 4,4'-Diaminodicyclohexan oder 4,4'-Diamino-3,3'-Dimethylcyclohexan und/oder
(2.3) mindestens ein Alkanolamin ausgewählt aus der Gruppe, bestehend aus Ethanolamin, Methylethanolamin, Di-iso-propylamin, Diethanolamin, N-Methyldiethanolamin, Hydroxyethoxyethylamin, Polyetheraminole, Aminomethylpropanol, Trishydroxymethylaminomethan oder Triethanolamin.

2. Beschichtungsstoff nach Anspruch 1, **dadurch gekennzeichnet, daß** bei Polyurethan (1) das zahlenmittlere Molekulargewicht Mn bei 1.500 bis 6.000 Dalton, der Verzweigungsgrad bei 0,1 bis 1,0 Mol/kg und die Funktionalität bei 2,5 bis 4,0 pro Mol liegen, die gegenüber Isocyanaten reaktionsfähigen funktionellen Gruppen OH-Gruppen sind, die Polyester (1.1) und/oder Polyether (1.2) eine Molmasse von 800 bis 1.800 Dalton aufweisen, die zur Anionenbildung befähigten funktionellen Gruppen der Verbindungen (1.6) Carbonsäure-, Phosphonsäure- und/oder Sulfonsäurengruppen sind und die Neutralisationsmittel (1.10) organische Basen enthalten oder hieraus bestehen.

3. Beschichtungsstoff nach Anspruch 1 oder 2, **dadurch gekennzeichnet, daß** das Blockierungsmittel (1.9) im molaren Verhältnis von 0,9 bis 1,3, bezogen auf die nicht mit den anderen Ausgangsprodukten umgesetzten oder umsetzbaren Isocyanatgruppen, und das Neutralisationsmittel (1.10) im molaren Verhältnis von 0,5 bis 1,2, bezogen auf die zur Anionenbildung befähigten funktionellen Gruppen der Verbindung (1.6), eingesetzt werden.

4. Beschichtungsstoff, welcher mindestens ein reaktives Polyurethan (1) gemäß einem der Ansprüche 1 bis 3 in einem wäßrigen Medium dispergiert enthält.

5. Beschichtungsstoff nach Anspruch 1, **dadurch gekennzeichnet, daß** das Polyol (2.1), das Polyamin (2.2) und/oder das Alkanolamin (2.3) bei Raumtemperatur nicht merklich flüchtig sowie wasserlöslich oder in Verbindung mit dem reaktiven Polyurethan (1) wasserverdünnbar sind.

6. Beschichtungsstoff nach Anspruch 5, **dadurch gekennzeichnet, daß** das Polyol (2.1), das Polyamin (2.2) und/oder das Alkanolamin (2.3) in einer Menge verwendet werden, daß das Verhältnis von (i) Äquivalentgewicht des Polyurethans (1), bezogen auf die hierin enthaltenen blockierten Isocyanatgruppen, zu (ii) Äquivalentgewicht des Vemetzungsmittels 0,6 bis 1,3 beträgt.

7. Beschichtungsstoff nach einem der Ansprüche 1 bis 6, **dadurch gekennzeichnet, daß** hierin lackübliche Additive (3) in wirksamen Mengen enthalten sind.

8. Verwendung der Beschichtungsstoffe gemäß einem der Ansprüche 1 bis 7 für die Herstellung von Basislacken, Klarlacken oder Uni-Decklacken.

9. Verwendung des Beschichtungsstoffs gemäß einem der Ansprüche 1 bis 7 für die Herstellung einschichtiger oder mehrschichtiger Lackierungen

10. Verwendung des Beschichtungsstoffs gemäß einem der Ansprüche 1 bis 7 für die Herstellung einschichtiger oder mehrschichtiger Automobilerstlackiemngen, industrieller Lackierungen, inklusive Coil Coatings und Container Coatings, und Möbellackierungen.

11. Verfahren zur Herstellung einschichtiger oder mehrschichtiger Lackierungen auf einem gegebenenfalls grundierten Substrat durch Applikation eines Beschichtungsstoffs und Aushärten der resultierenden Naßschicht, **dadurch gekennzeichnet, daß** man hierbei mindestens einen Beschichtungsstoff gemäß einem der Ansprüche 1 bis 7 verwendet.

12. Verfahren zur Herstellung mehrschichtiger Lackierungen auf einem gegebenenfalls grundierten Substrat nach Anspruch 11 durch
(I) Applikation eines Basislacks auf der Substratoberfläche oder der Grundierung,
(II) Naß-in-naß-Applikation eines Klarlacks und
(III) Aushärten der resultierenden Basislack-/Klarlackschicht
**dadurch gekennzeichnet, daß** man einen Basislack und/oder Klarlack gemäß einem der Ansprüche 1 bis 7 verwendet.

13. Einschichtige oder mehrschichtige Lackierungen herstellbar mit Hilfe des Beschichtungsstoffs gemäß einem der Ansprüche 1 bis 7 oder mit Hilfe des Verfahrens gemäß 11 oder 12.

14. Substrate, enthaltend einschichtige und/oder mehrschichtige Lackierungen gemäß Anspruch 13.

## Claims

1. Coating material, free from organic solvents, comprising at least one reactive polyurethane (1) having a number-average molecular weight Mn of from 800 to 14 000 daltons, a degree of branching of from 0.0 to 3.0 mol/kg, and an isocyanate functionality of from 2.0 to 6.0, which is preparable by reacting with one another
(1.1) at least one polyester and/or
(1.2) at least one polyether,
both of which have at least two isocyanate-reactive functional groups, a molecular mass of from 400 to 2500 daltons and a degree of branching of from 0 to 3.5 mol/kg;
(1.3) at least one polyol having a molecular mass of from 62 to 400 daltons and a functionality of from 2 to 4 and/or
(1.4) at least one polyamine and/or
(1.5) at least one alkanolamine;
(1.6) at least one compound having at least one functional group capable of forming anions and at least one isocyanate-reactive functional group;
(1.7) at least one polyisocyanate and/or
(1.8) at least one polyisocyanate adduct;
(1.9) at least one blocking agent for the isocyanate groups.
which are eliminated again at a certain reaction temperature from the isocyanate groups they block, or are released again by a substitution reaction in the presence of the crosslinking agent (2);
and
(1.10) at least one neutralizing agent for the anionic stabilization in the aqueous medium, which comprises or consists of organic and/or inorganic bases;
and
for the blocked isocyanate groups of the polyurethanes (1) a crosslinking agent (2) comprising
(2.1) at least one polyol selected from the group consisting of ethylene glycol, propylene glycol, ether oligomers of ethylene glycol and of propylene glycol, propane-1,3-diol, butane-1,4-diol, butane-1,3-diol, methylpropane-2,3-diol, pentane-1, 5-diol, methylbutane-1, 4-diol, neopentyl glycol, hexane-1,6-diol, glycerol, trimethylolethane, trimethylolpropane or trishydroxyethyl isocyanurate and/or
(2.2) at least one polyamine selected from the group consisting of ethylenediamine, propylenediamine, methyldiaminopropane, diethylenetriamine, dipropylenetriamine, m-xylylenediamine, p-xylylenediamine, 4,4'-diaminodicyclohexane or 4,4'-di-amino-3,3'-dimethylcyclohexane and/or
(2.3) at least one alkanolamine selected from the group consisting of ethanolamine, methylethanolamine, diisopropylamine, diethanolamine, N-methyldiethanolamine, hydroxyethoxyethylamine, polyetheraminols, aminomethylpropanol, tris-hydroxymethylaminomethane or triethanolamine.

2. Coating material according to Claim 1, **characterized in that**, for polyurethane (1), the number-average molecular weight Mn is from 1500 to 6000 daltons, the degree of branching is from 0.1 to 1.0 mol/kg and the functionality is from 2.5 to 4.0 per mol, the isocyanate-reactive functional groups are OH groups, the polyesters (1.1) and/or polyethers (1.2) have a molecular mass of from 800 to 1800 daltons, the functional groups of the compounds (1.6) that are capable of forming anions are carboxylic acid, phosphonic acid and/or sulfonic acid groups and the neutralizing agents (1.10) comprise organic bases or consist thereof.

3. Coating material according to Claim 1 or 2, **characterized in that** the blocking agent (1.9) is used in a molar ratio of from 0.9 to 1.3, based on the isocyanate groups which are not reactable or reacted with the other starting products, and the neutralizing agent (1.10) is used in a molar ratio of from 0.5 to 1.2, based on the functional groups of the compound (1.6) that are capable of forming anions.

4. Coating material which comprises at least one reactive polyurethane (1) according to any of Claims 1 to 3 in dispersion in an aqueous medium.

5. Coating material according to Claim 1, **characterized in that** the polyol (2.1), the polyamine (2.2) and/or the alkanolamine (2.3) are not markedly volatile at room temperature and are also water-soluble or water-dilutable in conjunction with the reactive polyurethane (1).

6. Coating material according to Claim 5, **characterized in that** the polyol (2.1), the polyamine (2.2) and/or the alkanolamine (2.3) are used in an amount such that the ratio of (i) equivalent weight of the polyurethane (1), based on the blocked isocyanate groups present therein, to (ii) equivalent weight of crosslinking agent is from 0.6 to 1.3.

7. Coating material according to any of Claims 1 to 6, **characterized in that** it comprises customary coatings additives (3) in effective amounts.

8. Use of the coating materials according to any of Claims 1 to 7 to prepare basecoat materials, clearcoat materials or solid-colour topcoat materials.

9. Use of the coating material according to any of Claims 1 to 7 for the production of single-coat or multicoat coating systems.

10. Use of the coating material according to any of Claims 1 to 7 for the production of single-coat or multicoat automotive OEM finishes, industrial coatings, including coil coatings and container coatings, and furniture coatings.

11. Process for producing single-coat or multicoat coating systems on a primed or unprimed substrate by applying a coating material and curing the resulting wet film, **characterized in that** at least one coating material according to any of Claims 1 to 7 is used.

12. Process for producing multicoat coating systems on a primed or unprimed substrate, according to Claim 11, by
(I) applying a basecoat material to the substrate surface or to the primer,
(II) applying a clearcoat material wet-on-wet, and
(III) curing the resulting basecoat/clearcoat film,
**characterized in that** a basecoat material and/or clearcoat material according to any of Claims 1 to 7 is used.

13. Single-coat or multicoat coating systems, producible with the aid of the coating material according to any of Claims 1 to 7 or with the aid of the process according to Claim 11 or 12.

14. Substrates comprising single-coat or multicoat coating systems according to Claim 13.

## Revendications

1. Substance de revêtement exempte de solvants organiques, qui contient au moins un polyuréthane réactif (1) dont le poids moléculaire moyen en nombre Mₙ est compris entre 800 et 14 000 Dalton, le degré de ramification entre 0,0 et 3,0 moles/kg et la fonctionnalité isocyanate entre 2,0 et 6,0, qui peut être préparée en faisant réagir les uns avec les autres :
(1.1) au moins un polyester et/ou
(1.2) au moins un polyéther,
l'un et l'autre présentant au moins deux groupes fonctionnels qui réagissent avec les isocyanates, une masse molaire de 400 à 2 500 Dalton et un degré de ramification de 0 à 3,5 moles/kg,
(1.3) au moins un polyol d'une masse molaire de 62 à 400 Dalton et d'une fonctionnalité de 2 à 4 et/ou
(1.4) au moins une polyamine et/ou
(1.5) au moins une alcanolamine,
(1.6) au moins un composé qui présente au moins un groupe fonctionnel capable de former des anions et au moins un groupe fonctionnel qui est capable de réagir avec des isocyanates,
(1.7) au moins un polyisocyanate et/ou
(1.8) au moins un produit d'addition de polyisocyanate,
(1.9) au moins un agent de blocage des groupes isocyanate qui, à une température de réaction définie, est dissocié des groupes isocyanate qu'il bloque ou est de nouveau libéré par une réaction d'échange en présence de l'agent de réticulation (2),
ainsi que
(1.10) au moins un agent de neutralisation pour la stabilisation anionique en milieu aqueux, qui contient des bases minérales et/ou organiques ou qui est constitué de celles-ci,
et
pour les groupes isocyanate bloqués des polyuréthanes (1), un agent de réticulation (2) qui contient:
(2.1) au moins un polyol sélectionné dans le groupe qui est constitué de l'éthylèneglycol, du propylèneglycol, d'éthers oligomères de l'éthylèneglycol et du propylèneglycol, du propanediol-1,3, du butanediol-1,4, du butanediol-1,3, du méthylpropanediol-1,3, du pentanediol-1,5, du méthylbutanediol-1,4, du néopentylglycol, de l'hexanediol-1,6, de la glycérine, du triméthyloléthane, du triméthylolpropane ou de l'isocyanurate de trishydroxyéthyle, et/ou
(2.2) au moins une polyamine sélectionnée dans le groupe constitué de l'éthylènediamine, de la propylènediamine, du méthyldiaminopropane, de la diéthylènetriamine, de la dipropylènetriamine, de la m-xylylènediamine, de la p-xylylènediamine, du 4,4'-diaminodicyclodexane ou du 4,4'-diamino-3,3'-diméthylcyclohexane et/ou
(2.3) au moins une alcanolamine sélectionnée dans le groupe constitué de l'éthanolamine, de la méthyléthanolamine, de la diisopropylamine, de la diéthanolamine, de la N-méthyldiéthanolamine, de l'hydroxyéthoxyéthylamine, des polyétheraminols, de l'aminométhylpropanol, du trishydroxyméthylaminométhane ou de la triéthanolamine.

2. Substance de revêtement selon la revendication 1, **caractérisée en ce que** le polyuréthane (1) présente un poids moléculaire moyen en nombre Mn de 1 500 à 6 000 Dalton, un degré de ramification de 0,1 à 1,0 mole/kg et une fonctionnalité de 2,5 à 4,0 par mole, les groupes fonctionnels qui réagissent avec les isocyanates étant des groupes OH, les polyesters (1.1) et/ou les polyéthers (1.2) ayant une masse molaire de 800 à 1 800 Dalton, les groupes fonctionnels des composés (1.6) capables de former des anions étant des groupes acide carboxylique, acide phosphonique et/ou acide sulfonique et les agents de neutralisation (1.10) contenant des bases organiques ou étant constitués de ces dernières.

3. Substance de revêtement selon la revendication 1 ou 2, **caractérisée en ce que** l'agent de blocage (1.9) est utilisé dans une proportion molaire de 0,9 à 1,3 par rapport aux groupes isocyanate qui n'ont pas réagi ou ne peuvent réagir avec les autres produits de départ, l'agent de neutralisation (1.10) étant utilisé dans une proportion molaire de 0,5 à 1,2 par rapport aux groupes fonctionnels du composé (1.6) capables de former des anions.

4. Substance de revêtement qui contient au moins un polyuréthane réactif (1) selon l'une des revendications 1 à 3 dans un milieu aqueux.

5. Substance de revêtement selon la revendication 1, **caractérisée en ce que** le polyol (2.1), la polyamine (2.2) et/ou l'alcanolamine (2.3) ne sont pas notablement volatils à température ambiante et sont solubles dans l'eau ou diluables dans l'eau en association avec le polyuréthane réactif (1).

6. Substance de revêtement selon la revendication 5, **caractérisée en ce que** le polyol (2.1), la polyamine (2.2) et/ou l'alcanolamine (2.3) sont utilisés en une quantité telle que la proportion (i) du poids équivalent du polyuréthane (1), par rapport aux groupes isocyanate bloqués qui y sont contenus, au (ii) poids équivalent de l'agent de réticulation est comprise entre 0,6 et 1,3.

7. Substance de revêtement selon l'une quelconque des revendications 1 à 6, **caractérisée en ce que** des additifs (3) habituels en peintures sont présents en quantités efficaces.

8. Utilisation des substances de revêtement selon l'une quelconque des revendications 1 à 7 pour la préparation de peintures de base, de vernis transparents ou de peintures dites "Unideck".

9. Utilisation de la substance de revêtement selon l'une quelconque des revendications 1 à 7 pour la préparation de peintures appliquées en une couche ou en plusieurs couches.

10. Utilisation de la substance de revêtement selon l'une quelconque des revendications 1 à 7 pour la réalisation de peintures d'automobiles en une couche ou en plusieurs couches, de peintures industrielles, notamment des revêtements de tôles et des revêtements de conteneurs ainsi que des peintures de meubles.

11. Procédé de réalisation de peintures en une couche ou en plusieurs couches sur un support éventuellement doté d'une couche de fond, par application d'une substance de revêtement et durcissement de la couche humide ainsi obtenue, **caractérisé en ce que** l'on y utilise au moins une substance de revêtement selon l'une quelconque des revendications 1 à 7.

12. Procédé de réalisation de peintures en plusieurs couches sur un support éventuellement doté d'une couche de fond, selon la revendication 11, par les étapes qui consistent à:
(I) application d'une peinture de base sur la surface du support ou sur la couche de fond,
(II) application humide-humide d'un vernis transparent et
(III) durcissement de la couche de peinture ou de vernis de base ainsi obtenue,
**caractérisé en ce que** l'on y utilise une peinture de base et/ou un vernis transparent selon l'une quelconque des revendications 1 à 7.

13. Peintures en une couche ou en plusieurs couches qui peuvent être réalisées à l'aide de la substance de revêtement selon l'une quelconque des revendications 1 à 7 ou à l'aide du procédé selon la revendication 11 ou 12.

14. Supports qui présentent des peintures en une couche ou en plusieurs couches selon la revendication 13.
